# EUROPEAN PATENT SPECIFICATION

(11) **EP 2 494 220 B1**
(45) Date of publication and mention of the grant of the patent: **13.01.2016**
(21) Application number: 09744678.5
(22) Date of filing: 28.10.2009
(51) Int. Cl.: F16C 19/18, F16C 33/76, F16C 43/04

(54) **SEAL WITH A GRIP PORTION FOR ROLLING BEARING, IN PARTICULAR FOR ROLLING BEARING USED IN A WIND TURBINE**
DICHTUNG MIT GRIFFTEIL FÜR EIN KUGELLAGER, IM BESONDEREN FÜR DAS KUGELLAGER EINER WINDTURBINE
DISPOSITIF D'ÉTANCHÉITÉ, COMPRENANT UNE PARTIE DE PRÉHENSION, POUR PALIER DE ROULEMENT, EN PARTICULIER POUR PALIER DE ROULEMENT UTILISÉ DANS UNE ÉOLIENNE

(43) Date of publication of application: 05.09.2012
(73) Proprietor: Aktiebolaget SKF, 415 50 Göteborg (SE)
(72) Inventor: TANKE, Jesko-Henning, 97422 Schweinfurt (DE); OVIZE, Pascal, 89530 Chitry Le Fort (FR); GRUBER, Andreas, 8741 Maria Buch-Feistritz (AT); SWETE, Wolfgang, 8720 Knittelfeld (AT)
(74) Representative: Casalonga, Axel
(86) International application number: PCT/EP2009/064218
(87) International publication number: WO 2011/050838

(56) References cited:
- DE-U- 1 940 357
- JP-U- 3 115 503
- US-A- 3 519 316
- US-A- 3 901 566

## Description

The present invention relates to the field of seals used in the rolling bearings, and more particularly in the rolling bearings operating in an aggressive outdoor environment due to the presence of various kinds of pollution, such as splashing water, dust and other foreign matter, to the exposition of the ultraviolet radiation emitted by the sun, and to the variations of temperature.

This is notably the case of the rolling bearings used in a wind turbine in order to angularly orient the rotor of said turbine according to the direction of the wind, and to orient the blades of the turbine around their longitudinal axes.

Generally, the seals used in rolling bearings operating in an aggressive environment are fixed by a heel engaged in a groove formed to a first ring of the rolling bearing and comprises two lips pressing against bearing surfaces of the second ring. The lips may act in opposite directions against their bearing surfaces in order to be able to follow the relative movements of the two rings. Such a rolling bearing is disclosed by US 3, 519, 316.

For these rolling bearings, it is necessary to foresee, in the long run, a substitution of the seals in order that outdoor aggressive elements may not affect the operation of the bearings.

To this end, a screwdriver is generally used to extract the seals outside of the rolling bearings. The shank of the screwdriver is first inserted between a lip of one of the seals and the corresponding bearing surface of the ring, and then the seal is moved outside by a pulling movement applied on said lip.

This is detrimental in terms of dismounting time and of easiness, notably for a large-diameter rolling bearing.

It is also known by JP 3 115503 a seal radially disposed between a shaft and a housing and provided with a static seal portion fixed to the shaft and with a dynamic seal portion in contact with the housing. The seal further comprises an axial extension extending axially towards the outside and being in a non-contact state with the shaft and the housing.

One aim of the present invention is to overcome the above-mentioned drawbacks.

It is a particular object of the present invention to provide a seal which is easy to install into a bearing, which prevents grease from escaping from the bearing, and which also prevents the ingress of moisture, dust and other bodies into the bearing.

A further object to the present invention is to provide a seal having good wear and aging resistances.

Another object to the present invention is to provide a seal adapted to a large-sized rolling bearing, such as a bearing for a wind turbine.

In one embodiment, the rolling bearing comprises an inner ring, an outer ring, at least one row of rolling elements and at least one seal provided between said rings. The seal comprises a static seal portion fixed to one of the rings and a dynamic portion having at least a lip in contact with another ring. The static seal portion comprises an annular groove oriented axially towards the corresponding ring and in which a complementary rib provided on said ring is housed to retain the seal on said ring. The seal further comprises a grip portion at least partly axially offset relative to the friction lip towards the outside of the rolling bearing, said grip portion being in a non-contact state with the inner and outer rings to allow the seal to be held or grasped and extracted outside of the rolling bearing.

The grip portion may extend axially towards the outside. The grip portion comprises advantageously at its free end a protrusion. The protrusion may be axially offset relative to a radial surface of at least one of the rings towards the interior of the rolling bearing or coplanar with said radial surface.

In one embodiment, the seal comprises at least an internal lip and an external lip directed towards the internal side and the external side of the rolling bearing. The free end of the grip portion may be axially offset outwards relative to the external lip.

Advantageously, the seal comprises an annular portion from which the grip portion and the lip(s) are issued.

In one embodiment which does not form part of the invention, the seal comprises at least two internal lips and two external lips. Said lips may have in cross section the overall shape of a X.

The seal may comprise at least two additional lips on its external side and/or on its internal side of the seal.

In one embodiment which does not form part of the invention, the inner and outer rings comprise opposite radial grooves inside which the free ends of the internal and external lips of the X-seal shaped are located. Preferably, the axial length of the grooves is larger than the axial length between the internal lips and the external lips in a free state of the seal in order to have an axial gap between the internal lips and walls of the grooves and/or between the external lips and opposite walls of said grooves. Advantageously, the seal is freely movable in axial direction relative to the inner and outer rings. The internal and external lips of the seal are resiliently coupled in the radial direction with the inner and outer rings. The seal may be freely movable in the circumferential direction relative to the inner ring and/or the outer ring.

In another embodiment which does not form part of the invention, the internal and external lips have in cross section the overall shape of a H. Said internal and external lips forming advantageously the two substantially parallel branches of said H. The inner and outer rings may comprise opposite radial ribs located axially between the internal and external lips to axially retain the seal. Preferably, the lips of the seal are resiliently coupled in the axial direction with the radial ribs. Advantageously, the thickness of the radial ribs is larger than the axial gap between the internal lips and the external lips in a free state of the joint in order to keep in a permanent contact the seal and said rib by elasticity. The seal may be freely movable in the circumferential direction relative to the inner ring and/or the outer ring. The internal lips can exhibit an outwardly curved profile so that only the free ends of said lips press against retaining surfaces of the ribs. The retaining surfaces of the ribs are substantially perpendicular to the rotational axis of the bearing.

In one embodiment of the invention, the static seal portion may comprise an axial portion mounted into a groove of the corresponding ring, a radial portion extending said axial portion, and a tilted portion extending said radial portion and directed obliquely towards the axial portion and adapted to press against a retaining surface of the corresponding ring, said portions defining the annular groove. The tilted portion may comprise an inner frustoconical flange adapted to press against the retaining surface. The axial portion may comprise tilted ribs adapted to contact with the groove in order to resist to an axial displacement of the seal. Advantageously, the axial gap between the internal lip and the external lip in a free state of the seal is smaller than the axial dimension of a rib provided on the ring and comprising frustoconical surfaces which said lips are intended to contact.

The seal may be formed from a thermoplastic urethane (TPU) liner. Alternatively, the seal can also be formed from another thermoplastic or from metal. The seal can also comprise both a metallic material and a plastic material such as the TPU.

The invention also concerns a replacement method of a seal mounted inside a rolling bearing comprising an inner ring, an outer ring and at least one row of rolling elements provided between said rings, said seal comprising at least a lip in contact with one of the rings and a grip portion at least partly axially offset relative to the friction lip towards the outside of the rolling bearing, said grip portion being in a non-contact state with the rings. At least the grip portion of the seal is grasped and then the seal is extracted outside of the rolling bearing by an axial pulling movement. Another seal having or not a grip portion is mounted in replacement of the extracted seal between the inner and outer rings. The seal may be extracted outside of the rolling bearing by pulling with hands, for example with a tool such as a plier, or with a machine.

Illustrative and non-limiting embodiments will be described below in detail with reference to the appended drawings, in which:
- Figure 1 is a half section of a rolling bearing comprising two seals according to a first embodiment which does not form part of the invention,
- Figure 2 is a part section on a larger scale of the rolling bearing of Figure 1,
- Figure 3 is a part section showing the mounting of the seal of Figure 2,
- Figure 4 is a part section showing the extraction of the seal of Figure 2, and
- Figure 5 is a half section of a rolling bearing comprising two seals according to a second embodiment which does not form part of the invention,
- Figure 6 is a part section on a larger seal of the rolling bearing of Figure 5,
- Figure 7 is a half section of a rolling bearing comprising two seal according to a first embodiment of the invention,
- Figure 8 is a part section on a larger scale of the rolling bearing of Figure 7, and
- Figure 9 is a part section of a rolling bearing according to a second embodiment of the invention.

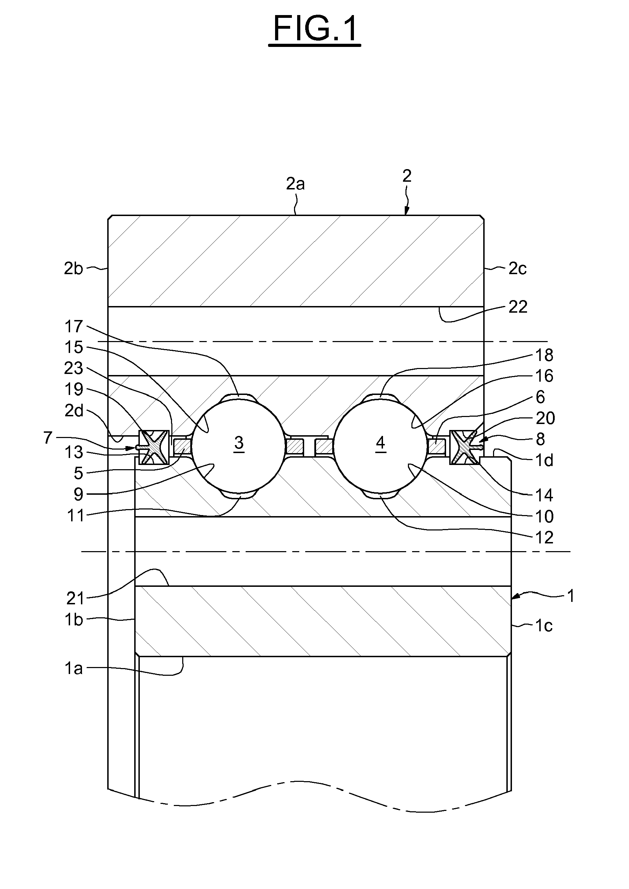

The rolling bearing as illustrated by Figure 1 is a large-diameter rolling bearing comprising an inner ring 1 and an outer ring 2 between which are housed two rows of rolling elements 3 and 4, which in this case are balls, two annular cages 5, 6 respectively maintaining the circumferential spacing of rolling elements 3 and 4, and two annular seals 7 and 8.

The inner and outer rings 1, 2 are concentric and symmetric with respect to a transverse radial plane passing through the centre of the rolling bearing. The inner ring 1 is of the solid type. A "solid ring" is to be understood as a ring obtained by machining with removal of material (by machining, grinding) from metal tube stock, bar stock, rough forgings and/or rolled blanks.

The inner ring 1 has a bore 1a of cylindrical shape designed to be fixed to a chassis or to a structure of a machine (not shown) and delimited by opposite radial lateral surfaces 1b, 1c. The inner ring 1 also includes an exterior cylindrical surface 1d onto which first and second toroidal circular races 9, 10 are formed. The races 9 and 10 are mutually symmetric with respect to the transverse radial plane passing through the centre of the rolling bearing. Each race 9, 10 is subdivided by an annular groove 11, 12 into two raceways having in cross section a concave internal profile adapted to the rolling elements 3, 4. The raceways of the races 9, 10 are directed outwards.

The inner ring 1 also comprises two annular grooves 13, 14 formed radially towards the inside from the outer surface 1d, respectively in the vicinity of the radial surfaces 1b, 1c. The grooves 13, 14 are symmetrical relative to the radial plane passing through the centre of the rolling bearing. In this embodiment, the center of the rolling bearing is the point on the rotation axis of bearing and equidistant from the two rows of rolling elements 3, 4.

The outer ring 2, also of the solid type, comprises an outer cylindrical surface 2a delimited by opposite radial lateral surfaces 2b, 2c. The radial lateral surface 2c is axially set back from the corresponding radial surface 1c of the inner ring 1, whereas the radial lateral surface 1b of said inner ring is axially set back from the corresponding radial surface 2b of the outer ring. Alternatively, the radial lateral surfaces 2b and 1b, 2c and 1c of the inner and outer rings 1, 2 could be respectively coplanar.

The outer ring 2 also includes a bore 2d of cylindrical shape into which first and second toroidal circular races 15, 16 are formed. The races 15, 16 are mutually symmetric with respect to the radial plane passing through the centre of the rolling bearing. Similarly to races 9 and 10, each race 15, 16 is subdivided by an annular groove 17, 18 into two raceways having in cross section a concave internal profile adapted to the rolling elements 3, 4. The raceways of the races 15, 16 are directed radially inwards. Each rolling element 3, 4 respectively arranged between the raceways of the races 9, 15 and 10, 16, while at the same time being kept spaced apart by the cages 5 and 6, have four points of contact with the rings 1, 2 so that the bearing has a high rigidity both radially and axially.

The outer ring 2 also comprises two annular grooves 19, 20 formed radially towards the outside from the bore 2d, respectively in the vicinity of the radial surfaces 1c, 2c. The groove 19, 20 is respectively situated in a radial plane containing the groove 13, 14. The groove 13, 14 respectively radially faces the grooves 19, 20.

In this embodiment, the rings 1, 2 comprise, in a way known per se, holes 21 and 22 for fixing the two rings to two parts of a machine, which can rotate one with respect to the other by virtue of the rolling bearing.

The two rings 1, 2 are separated radially from one another by an annular space 23 in which the cages 5, 6 rotate. In the vicinity of the radial surfaces 1b and 2b, 1c and 2c, the radial dimension of the space 23 is increased by virtue of the grooves 13 and 19, 14 and 20. The seals 7, 8 are positioned radially between the inner and outer rings 1, 2 inside these zones of the space 23 which are delimited by the grooves 13 and 19, 14 and 20. The seal 7 is mounted axially between the rolling elements 3 and the radial surface 1b of the ring 1. The seal 7 is entirely housed into the rings 1 and 2. In other words, the seal 7 is axially offset relative to the radial surfaces 1b, 2b towards the interior of the rolling bearing.

The seal 8 is positioned axially between the rolling elements 4 and the radial surface 2c of the ring 2. The seal 8 is identical to the seal 7 and is positioned symmetrically with respect to the latter with regard to the radial plane passing through the centre of the rolling bearing. A closed space is defined between the rings 1, 2 and the seals 7, 8 in which the rolling members 3, 4 are housed so as to be protected against polluting elements.

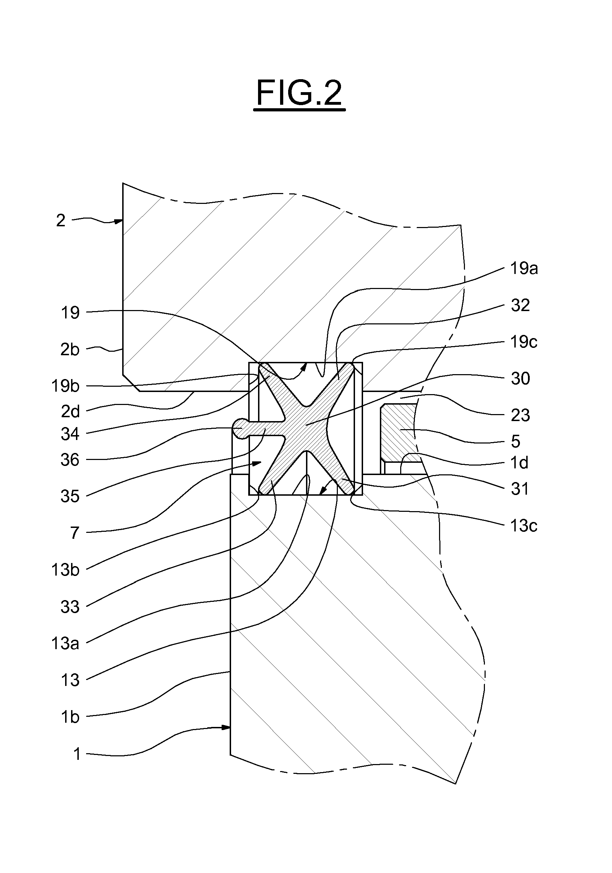

As shown more clearly on Figure 2, the seal 7 formed of an elastic material comprises an annular central portion 30, two annular internal lips 31, 32 and two annular external lips 33, 34. Said lips are issued from the annular portion 30 and have in cross section the overall shape of a X. The lips 31, 32 and 33, 34 are symmetric with respect to a transverse radial plane passing through the centre of the seal 7, the lips 31, 33 and 32, 34 being also symmetric with respect to a transverse axial plane passing through the central portion 30. The lips 31, 32 are directed obliquely towards the inside of the rolling bearing, the lips 33, 34 being directed obliquely outwards. The lips 31, 33 extends radially towards the inner ring 1, the lips 32, 34 extending radially towards the outer ring 2. The lips 31, 33 and 32, 34 respectively press against the axial bottom 13a, 19a of the groove 13, 19 provided on the ring 1, 2. The friction lips 31 to 34 have a certain degree of radial elasticity and join or attach directly the central portion 30. In the illustrated embodiment, the thickness of the lips 31 to 34 reduces from the central portion 30 towards their free ends. Thus, there is less friction between the seal 7 and the rings 1, 2. Alternatively, it could also be possible to foresee a seal with lips having a thickness which increases from the central portion 30 towards their free ends.

The seal 7 also comprises an annular grip portion 35 issued from the central portion 30 and extending axially towards the external lips 33, 34. The grip portion 35 is located on the external side of the seal 7 and extends towards the outside of the rolling bearing. The grip portion 35 is provided at its free end with a rib or protrusion 36. The protrusion 36 has here a spherical form and is axially offset outwards relative to the external lips 33, 34. Alternatively, the protrusion 36 may be axially offset towards the central portion 30 relative to said lips 33, 34. The annular protrusion 36 is axially offset relative to the radial surface 1b of the inner ring 1 towards the interior of the rolling bearing. The grip portion 35 and the protrusion 36 are located in the axial plane passing through the central portion 30 with regards to which the lips 33, 34 are symmetric.

The seal 7 is radially maintained into the annular space 23 defined between the inner and outer rings by the bottoms 13a, 19a of the grooves 13, 19. Only the free ends of the lips 31, 33 and 32, 34 press against said bottoms. The annular central portion 30 of the seal 7 is radially disposed into the housing delimited by the grooves 13, 19 in a non-contact state. The grip portion 35 and the protrusion 36 are also in a non-contact state with the rings 1, 2. In other words, a first annular radial gap is provided between the cylindrical surface 1d of the inner ring 1 and the grip portion 35 and the protrusion 36, and a second annular radial gap is provided between these elements of the seal 7 and the bore 2d of the outer ring 2.

In order to keep in a permanent contact state the lips 31, 33 and 32, 34 with the axial bottoms 13a and 19a of the grooves 13 and 19, the radial dimension of the seal 7 in a free state is made larger than the radial dimension of the space delimited by said grooves. Thus, by the elasticity of the seal 7 in radial direction, the lips 31 to 34 are kept in permanent contact with the bottom 13a, 19a. The seal 7 and the rings 1, 2 are thus resiliently coupled in the radial direction which prevents relative radial displacement between the seal 7 and said rings.

Furthermore, in any condition during operation, a radial gap always remains between the central portion 30 and the grip portion 35 of the seal 7 and the bottom 13a of the groove 13, and between said central portion and grip portion of the seal and the bottom 19a of the groove 19. Thanks to this, the central portion 30, the grip portion and the protrusion 36 do not contact the rings 1, 2 which would create abnormal excess of friction torque.

The axial dimension of the grooves 13, 14 is larger than the axial dimension between the internal lips 31, 32 and the external lips 33, 34 in order that relative axial slight movements may occur between the seal 7 and the rings 1, 2. In the embodiment depicted, an axial annular gap is provided between the lips 33, 34 and radial walls 13b, 19b of the grooves 13, 19. An axial annular gap is also provided between the lips 31, 32 and opposite radial walls 13c, 19c of said grooves. For example, the axial gaps provided between the seal and the radial walls 13b, 19b and 13c, 19c of the grooves 13, 19 may be equal to one or two millimeters. The radial walls 13b, 19b and 13c, 19c are respectively coplanar.

In case of axial relative axial movements between the two rings 1, 2 in addition to the rotational movements, under the action of the loads to which the rolling bearing may be subjected during operation of the machine, the lips 31, 33 and 32, 34 still press against the axial bottoms 13a and 19a of the grooves 13 and 19, thus maintaining their sealing functions. Otherwise, when the rings 1, 2 move radially relative towards each other, the gaps provided between the lips 31 to 34 and the radial walls of the grooves 13, 19 allow said lips to change slightly their inclination in order to adapt the radial dimension of the seal to the reduced space delimited by the grooves 13, 19. In this case, the lips 31 to 34 still bear against the axial bottoms 13a, 19a of the grooves 13, 19.

The internal lips 31, 32 axially located towards the cage 5 and the rolling element 3, i.e. on the internal side of the rolling bearing, prevent any escape of grease from the inside of the bearing to the outside. The lips 31, 32 being directed obliquely inwards the rolling bearing, any increase in pressure inside the bearing leads to an increase of the pressing force of lips 31, 32 against the bottom 13a, 19a of the grooves 13, 19 without the risk of said lips being expelled under the effect of the raised pressure likely to occur, for example when lubricating the bearing through greasing holes (not shown).

The external lips 33, 34 axially located towards the external side of the rolling bearing prevent foreign matter from entering inside of the bearing, such as moisture, dust or muddy wetter. Any increase in pressure outside the bearing also leads to an increase of the pressing force of the lips 33, 34 against the rings 1, 2. The internal lips 31, 32 supplement the action of the external lips 33, 34 and vice-versa, and improve the protection against the ingress of moisture and other foreign bodies into the rolling bearing from the outside.

With an increase of the pressure inside or outside the bearing occurs, the seal 7 can nevertheless move freely relative to the rings 1, 2 in the axial direction, the lips 31 to 34 maintaining their sealing function. With such axial displacement of the seal 7, radial walls 13b, 19b and 13c, 19c of the grooves 13, 19 may form means of axially retaining the seal 7 into the space delimited by said grooves. To this end, the internal diameter of the lips 31, 33 is smaller than the diameter of the cylindrical surface 1d, and the external diameter of the lips 32, 34 is larger than the diameter of the bore 2d. The internal lips 31, 32 and the external lips 33, 34 of the seal 7 also maintain their sealing functions in the event of radial or tipping movements of the inner and outer rings 1, 2 under the action of said loads.

During operation, either when one ring of the bearing rotates with respect to the other or when it stands still, the seal 7 can also move in the circumferential direction relative to the inner ring 1, and/or outer ring 2. In this case, sliding occurs against the bottom 13a, 19a of the grooves 13, 19. With such a sliding, a little wear may occur on the lips 31 to 34. However, with the elasticity of the seal 7 in radial direction, the lips 31 to 34 are kept in permanent contact with the bottom 13a, 19a.

The circumferential movement of the seal 7 relative to the rings 1, 2 remains possible since there is no fixing part between these elements. The seal 7 is namely not rigidly fixed to one of said rings 1, 2 in the circumferential direction. This makes easier the mounting of the seal 7 inside of the bearing. Specifically, the seal 7 may be mounted with an axial pushing movement without angular indexation.

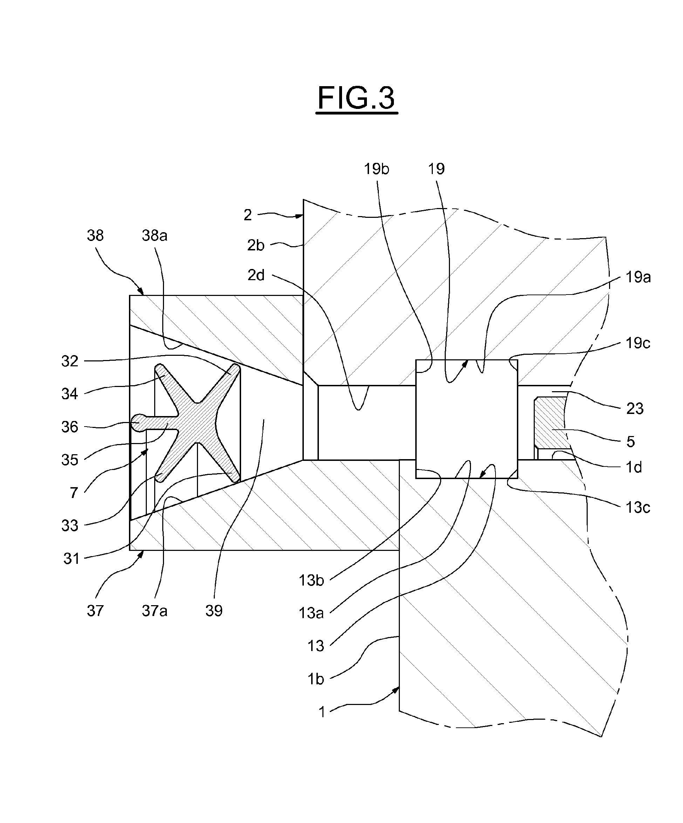

As shown on Figure 3, to achieve the mounting of the seal 7 into the rolling bearing, in a first step, annular guides 37, 38 are mounted bearing against radial surfaces 1b, 2b of the rings 1, 2. The guides 37, 38 each comprise a frustoconical surface 37a, 38a radially facing each other and delimiting radially therebetween an annular passage or hole 39 having a frustroconical form which narrows inwards in direction of the rolling bearing in order that a small diameter edge of said hole axially extends the annular space 23 provided between the rings 1, 2. For instance, the frustoconical surfaces 37a, 38a each make an angle comprised between 5 and 20° with the axis of the rolling bearing. The inclination of the frustoconical surfaces 37a, 38a are identical.

Then, the seal 7 is disposed into the hole 39 and pushed axially towards the rolling bearing. By virtue of the frustoconical form of said hole, the lips 31, 32 and 33, 34 are radially compressed or deformed towards the central portion 30. The radial deformation of the lips 31 to 34 inwards is achieved outside of the rolling bearing. After passing through the hole 39, the seal 7 is axially pushed between the rings 1, 2 until to be disposed into the space delimited by the grooves 13, 19. The lips 31 to 34 then recover by elasticity their initial shape and press against the bottoms 13a, 19a of said grooves. To push axially the seal into the hole 39 and between the rings 1 and 2, the grip portion 35 may be used.

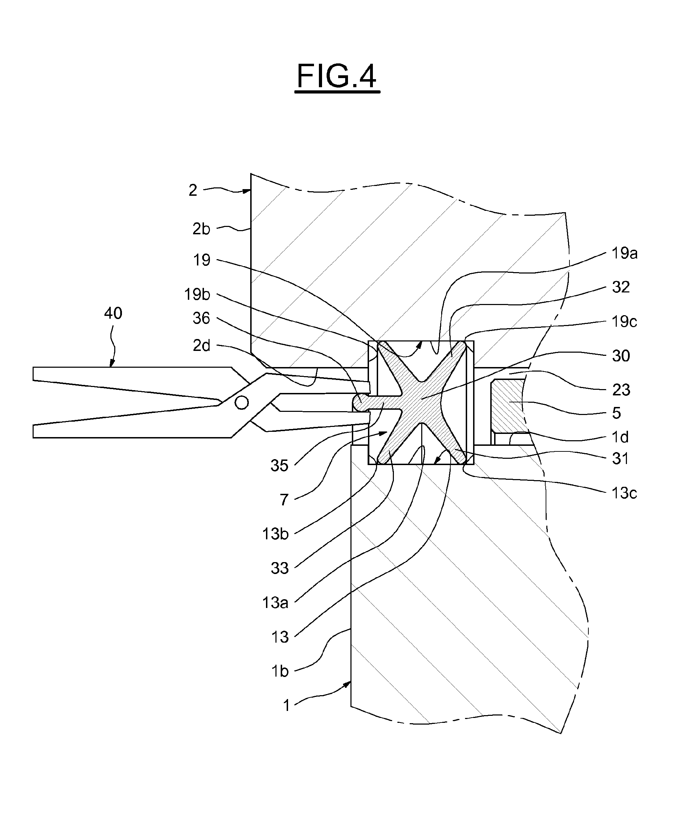

The grip portion 35 and the protrusion 36 are however mainly foreseen to make easier the extraction of the seal 7 outside of the bearing. In fact, as shown on Figure 4, the grip portion 35 and the protrusion 36 being into a non-contact state with the rings 1 and 2, a tool, for example a plier 40, may be inserted radially between said rings to catch the protrusion 36 of the grip portion 35 and to extract the seal 7 outside of the rolling bearing by a simple axial pulling movement. In other words, the grip portion 35 forms on the seal 7 a rib extending towards the outside of the rolling bearing. The grip portion 35 extends axially beyond the lips 33, 34 towards the outside to make easier the gripping of the seal 7.

Advantageously, the seal 7 is integrally formed in one part from an elastic material flexible enough to allow an easy installation into the bearing, for example a thermoplastic urethane (TPU) liner or an elastomer, such as an acrylonitrile-butadiene rubber (NBR) offering also a good resistance to low and high temperatures, to wear, to ozone, to ultraviolet radiations, and being an excellent fungal inhibitor. Besides, with such materials, the seal 7 can easily be manufactured by extrusion at the desired X-shaped section in the form of a band, and after cutting to the desired length, and then wound on itself. To obtain the seal 7, a heating plate may be used to heat the ends of the band in order to weld them end to end. With such a welding, the mechanical properties of the seal outperform those obtained with a seal wounding on itself and connected end to end by glue. Alternatively, the seal 7 may also be obtained by turning.

As above-mentioned, the sealing of the bearing on the other side is provided by the seal 8 which is identical to the seal 7 and which cooperates with grooves 14, 20 of the inner and outer rings 1, 2.

Advantageously, the bottom of the grooves 13, 14 and 19, 20 provided on the inner ring 1 and outer ring 2 are coated to prevent corrosion under the lip ends when the rolling bearing is used in aggressive environments. The coating used can be rubber, zinc, non-corroding steel, ceramic, organic material with ceramics, particles, or polytetrafluorethylene. For instance, the coating can be applied by means of thermal spray, anodizing, physical vapor deposition, cold spray, welding, gluing, etc.

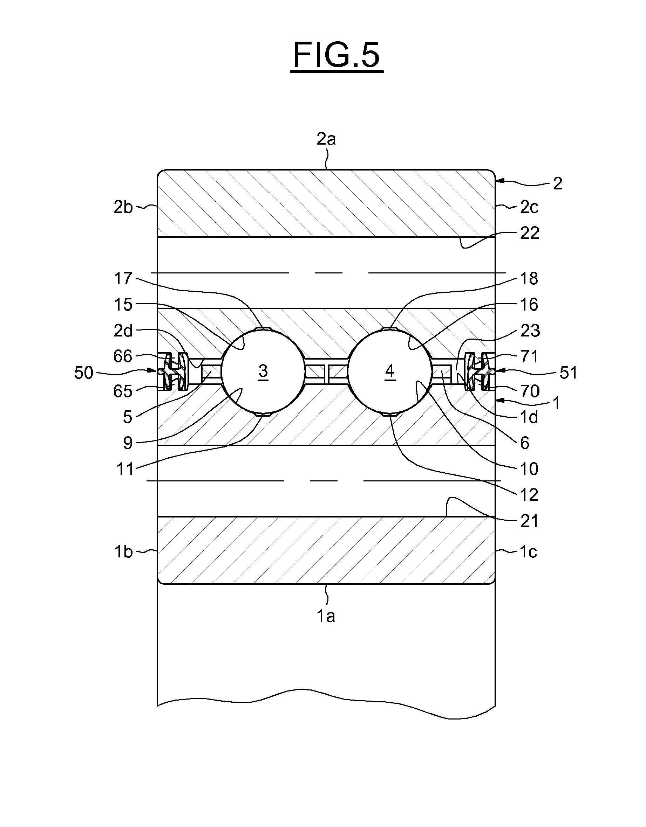

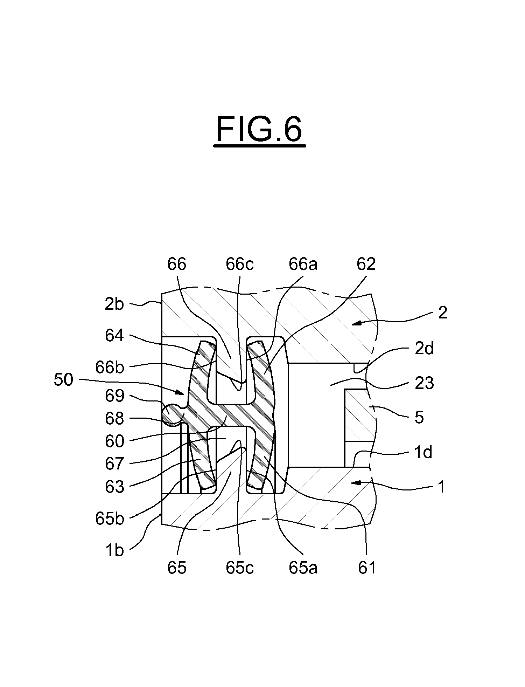

On the embodiment illustrated in Figures 5 and 6, in which identical parts are given identical references, the rolling bearing comprises two annular seals 50, 51 having in cross section the overall shape of a H, in substitution of the seals 7, 8. The seals may advantageously be integrally formed in one part from a thermoplastic urethane (TPU) liner or an elastomer, such as an acrylonitrile-butadiene rubber (NBR). In these embodiments, the radial lateral surfaces 2b and 1b, 2c and 1c of the inner and outer rings 1, 2 are respectively coplanar.

The seal 51 formed of an elastic material comprises an annular portion 60, two annular internal lips 61, 62 forming one of the branches of the H, and two annular external lips 63, 64 forming the other branch of said H. The lips 61, 62 and 63, 64 are symmetric with respect to a transverse radial plane passing through the centre of the seal 51, the lips 61, 63 and 62, 64 being also symmetric with respect to a transverse axial plane passing through the portion 60. The lips 61, 63 and 62, 64 respectively press against annular radial protrusions or ribs 65 and 66 provided on the inner and outer rings 1 and 2 and radially facing each other. The lips 61 to 64 have a certain degree of axial elasticity and join or attach directly the annular portion 60.

The annular rib 65 extends radially from the exterior cylindrical surface 1d of the inner ring 1 in the direction of the rib 66 of the outer ring 2. The rib 65 is in the vicinity of the radial surface 1b. The rib 65 is delimited by opposite radial lateral surfaces 65a, 65b and by a frustoconical exterior surface 65c orientated in such a way that its upward extension is located towards the cage 5 and the rolling elements 3, i.e. on the internal side of the rolling bearing. Here, the frustoconical surface 65c makes an angle of approximately 45° with the axis of the rolling bearing.

Similarly, the annular rib 66 provided on the bore 2d of the outer ring 2 is delimited by opposite radial lateral surfaces 66a, 66b and by a frustoconical bore 66c. The radial lateral surfaces 65a and 66a, 65b and 66b are respectively coplanar. By considering the frustoconical exterior surface 65c, the bore 66c has a slope in an opposite direction. Thus, the downward extension of the bore 65c is located towards the cage 5 and the rolling element 3. The ribs 65, 66 delimit an annular passage or a hole 67 radially delimitated by the frustoconical surfaces 66c and 65e which narrows inwards in direction of the rolling elements 3.

The seal 51 also comprises an annular grip portion 68 issued from the external side of the annular portion 20 an extending axially towards the outside of the rolling bearing. The grip portion 68 is provided at its free end with a rib or protrusion 69. The protrusion 69 has here a spherical form. The grip portion 68 is axially offset outwards relative to the external lips 63, 64. The free end of the annular protrusion 69 is coplanar with the radial lateral surfaces 1b, 2b of the inner and outer rings 1, 2. The grip portion 68 and the protrusion 69 are located in the axial plane passing trough the annular portion 20. The grip portion 68 and the protrusion 69 are in a non-contact state with the rings, i.e. spaced radially apart from said rings, in order that a tool may be inserted between said rings to held the protrusion 69 and extract the seal outside of the rolling bearing.

The seal 51 is axially maintained into the space 23 defined between the inner and outer rings 1, 2 by the opposite radial ribs 65, 66. More precisely, the surfaces 65a, 66a, 65b, 66b respectively form retaining surfaces for the lips 61 to 64. The annular portion 60 of the seal 50 is radially disposed into the hole 67 in a non-contact state.

The lips 61, 62 exhibit an outwardly curved profile so that only their free ends press against the bearing surfaces 65a, 66a. Similarly, the lips 63, 64 exhibit an inwardly curved profile so that in absence of pressure, only their free ends respectively press against the retaining outer surfaces 65b, 66b. The free ends of branches of the seal 51 converge axially towards one another. In the embodiment depicted, the friction lips 61, 62 and 63, 64 are shaped and dimensioned in such a way that their lines of pressing against the rib 65 and 66 are perpendicular to the axis of the rolling bearing.

In order to keep in a permanent contact state the lips 61, 63 and 62, 64 with ribs 65 and 66, the thickness of the ribs is made larger than the axial gap between the lips in a free state. Thus, by the elasticity of the seal 51 in axial direction, the lips 61 to 64 are kept in permanent contact with the retaining surfaces 65a, 66a, 65b, 66b. The seal 51 and the ribs 65, 66 are thus resiliently coupled in the axial direction which prevents relative axial displacement between the seal 51 and the rings 1, 2.

The annular ribs 65, 66 axially maintain the seal 51 into the space 23 defined between the inner and outer rings 1 and 2. The ribs 65, 66 constitute a means of axially retaining the seal 51 into the space 19 provided between the rings 1, 2. To this end, the internal diameter of the lips 61, 63 is smaller than the diameter of the downward extension of the frustoconical surface 65c, and the external diameter of the lips 62, 64 is larger than the diameter of the downward extension of the frustoconical bore 66c.

The seal 51 is radially maintained into the space 23 by the inner and outer rings 1 and 2. Radial gaps are provided between the lips 61, 63 and the exterior surface 1d, and between the lips 62, 64 and the bore 2d. Thus, slight relative radial movements may occur between the rings 1, 2 and the seal 7.

The internal lips 61, 62 axially located towards the cage 5 and the rolling element 3, i.e. on the internal side of the rolling bearing, which are in contact with the ribs 65, 66 prevent any escape of grease from the inside of the bearing to the outside.

Besides, by virtue of the outwardly curved profile of said lips 61, 62 and of their cooperation with the retaining surfaces 65a, 66a, any increase of pressure inside the bearing leads to an increase of the pressing force of the lips 61, 62 against the retaining surfaces 65a, 66a without the risk of said lips being expelled under the effect of the raised pressure likely to occur, for example, when lubricating the bearing through greasing holes (not shown). In this case, there may be a radial planar contact between the lip 61 and the retaining surface 65a, and between the lip 62 and the retaining surface 66a. The radial gaps between the lips 61 and the inner ring 1, and between the lips 62 and the outer ring 2 make these planar contacts easier.

The external lips 63, 64 axially located towards the external side of the rolling bearing which are in contact with the ribs 65, 66 prevent foreign matter from entering inside of the bearing, such as moisture, dust or muddy water. The internal lips 61, 62 supplement the action of the external lips 63, 64, and improve the protection against the ingress of moisture and other foreign bodies into the bearing from the outside.

The internal lips 61, 62 and the external lips 63, 64 of the seal 51 also maintain their functions in the event of relative movements of the two rings 1 and 2 under the action of loads (axial, radial, tipping moments) to which the bearing may be subjected during operation of the machine, without the seal 51 losing its sealing function.

During operation, the seal 51 can move in the circumferential direction relative to the inner ring 1 and/or outer ring 2. In this case, sliding occurs against the retaining surfaces 65a, 65b, 66a, 66b. With such a sliding, a little wear may occur on the lips 61 to 64 of the seal. However, with the elasticity of the seal 51 in axial direction, the lips 61 to 64 are kept in permanent contact with the retaining surfaces 65a, 66a, 65b, 66. By virtue of the radial gaps between the lips 61, 63 and the ring 1, and between the lips 62, 64 and the ring 2, a slight radial movement can also occur between the seal 51 and said rings.

The angular movement of the seal 51 relative to the rings 1, 2 remains possible since there is no fixing part between these elements. The seal 51 is namely not rigidly fixed to one of said rings 1, 2 in the circumferential direction. This makes the mounting of the seal 51 easier into the rings 1, 2 of the bearing. Specifically, the seal is mounted with a simple axial pushing movement without angular indexation.

As above-mentioned, the sealing of the bearing on the other side is provided by the seal 8 which is identical to the seal 7 and which cooperates with annular ribs 70, 71 of the inner and outer rings 1, 2. Said ribs 70, 71 and 65, 66 are mutually symmetric with respect to the transverse radial plane passing through the center of the rolling bearing. In the embodiment depicted, the ribs 65, 70 and 66, 71 are integrally formed with the inner and outer rings 1 and 2. Alternatively, said ribs may be separate bodies.

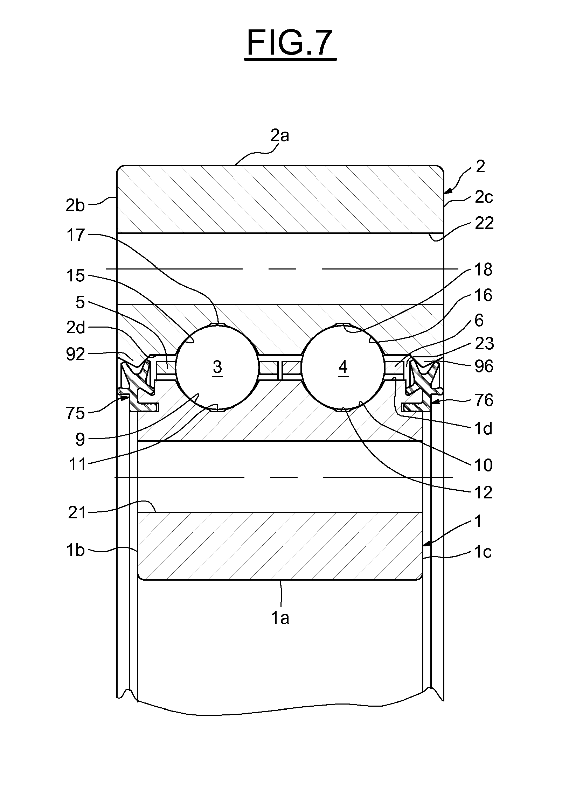

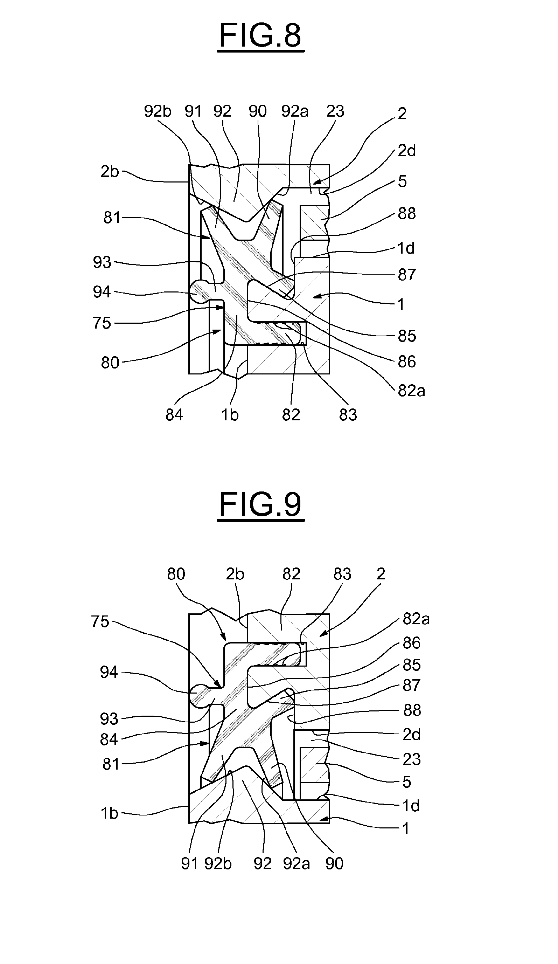

On the embodiment illustrated in Figures 7 and 8, in which identical parts are given identical references with regards to the first embodiment, the rolling bearing comprises two annular seals 75, 76 in substitution of the seals 7, 8 which comprise a static seal portion mounted on the inner ring 1 and a dynamic seal portion which cooperates with the outer ring 2. The seals may advantageously be integrally formed in one part from thermoplastic urethane (TPU) liner or an elastomer such as acrylonitrile-butadiene rubber (NBR).

The static seal portion 80 of the seal 75 is provided with an annular axial portion 82 mounted into an annular groove 83 provided on the radial surface 1b of the ring 1, with a radial portion 84 extending radially towards the outer ring 2 from the axial portion 82 and having an inner side which presses against the radial surface 1b, and with an annular tilted portion 85 extending from a large-diameter edge of the radial portion 84 towards the axial portion 82. The tilted portion 85 is directed obliquely inwards and forms a lip pressing against the ring 1. The portions 82, 84 and 85 form an annular heel or backbone having an annular groove 86 oriented axially towards the inner ring 1. The annular groove 86 has a trapezoidal cross section with an overall shape of a C.

Between the radial surface 1b and the exterior surface 1d, the inner ring 1 comprises a retaining surface 87 on which the tilted portion 85 presses and which is extended radially outwardly by a radial portion 88. The retaining surface 87 is formed on the inner ring 1 in the form of a frustoconical surface oriented in such a way that its downward extension is located towards the cage 5 and the rolling elements 3, i.e. on the internal side of the rolling bearing. In the illustrated example, the frustoconical bearing surface 87 makes an angle of approximately 45° with the axis of the rolling bearing. The inner flange of the tilted portion 85 comes into contact with the retaining surface 87, a free end of said tilted portion pressing against the radial portion 88.

The retaining surface 87 and the annular groove 83 define, on the radial surface 1b of the inner ring 1, an annular rib extending axially outwards and adapted to cooperate with the annular groove 86 of the seal 75 for mounting and retaining said seal on the inner ring 1. In other words, with its groove 86, the seal 75 is inserted for instance in a snap-in way by complementary shape on the axial rib provided on the radial surface 1b of the inner ring 1. Thus, the mounting of the seal 75 on the ring 1 can be easily achieved for example with a simple axial pushing movement without angular indexation. The static seal portion 80 of the seal 75 can be effectively secured on the inner ring 1 by virtue of the elasticity of said seal.

To achieve a good axial retaining effect of the seal 75 on the inner ring 1, the annular portion 82 may comprise a plurality of annular ribs 82a extending radially outwards. The ribs 82a are into contact with the groove 83 provided on the ring 1 and are tilted in order to prevent an axial displacement of the seal 75 away from the inner and outer rings 1, 2.

The dynamic seal portion 81 of the seal 75 comprises an annular internal lip 90 and an external lip 91 both of which join or attach directly the annular heel of the static seal portion 80. The lips 90, 91 press against an annular rib 92 provided on the bore 2d of the outer ring 2. The rib 92 provided on the bore 2d is defined by frustoconical surfaces 92a, 92b. The frustoconical surface 92a is oriented in such a way that its downward extension is directed toward the inner ring 1 and is located axially towards the external side of the rolling bearing. By considering the frustoconical surface 92a, the surface 92b has a slope in an opposite direction and is extended radially from the radial surface 2b.

The dynamic seal portion 81 of seal 75 is radially disposed into the space 23 defined between the inner and outer rings 1, 2. The friction lips 90, 91 have, in cross section, the overall shape of a V which is oriented towards the outer ring 2. Said lips respectively cooperate with the frustoconical surfaces 92a, 92b to create a dynamic tightness with the outer ring 2. More precisely, only the axially external free end of the internal lip 90 and only the axially internal free end of the external lip 91 press against frustoconical surfaces 92a, 92b. The internal lip 90 is directed obliquely inwards, the external lip 91 being directed obliquely outwards.

In order to keep in a permanent contact state the lips 90, 91 with the protrusion or rib 92, the axial dimension of said rib 92 is larger than the axial gap between the free ends of lips 90, 91 in a free state of the seal 75. Thus, by the elasticity of the seal 75 in axial direction, the lips 90, 91 are kept in permanent contact with the surfaces 92a, 92b.

Furthermore, in any condition during assembly or operation, the edge of the annular rib 92 always remains radially away from the bottom of the V shape formed by the lips 90 and 91. That is to say that a radial gap is always present between the edge of the rib 92 and the bottom of the V. Thanks to this, in case the seal 75 is accidentally pressed too much towards the inside of the bearing for instance during assembly, the bottom of the V won't contact the edge of the rib 92, which would create abnormal excess of friction torque.

The internal lip 90 is axially directed towards the cage 5 and the rolling element 3, i.e. on the internal side of the rolling bearing. The lip 90 is contacting the frustoconical surface 92a of the rib 92 thus preventing any escape of grease from the inside of the bearing to the outside. By virtue of the frustoconical surface 92a and its cooperation with the lip 90 directed obliquely inwards, any increase in pressure inside the bearing leads to an increase of the pressing force of the lip 90 against the surface 92a without the risk of said lip being expelled under the effect of the raised pressures likely to occur, for example, when lubricating the bearing through greasing holes (not shown). In this case, there may be an oblique planar contact between the lip 90 and the surface 92a.

Besides, by virtue of the frustoconical retaining surface 87 and of the orientation of the tilted portion 85, any increase in pressure inside the bearing leads to an increase of the pressing force of the portion 85 against the surface 87. Thus, the sealing and retaining effects of the tilted portion 85 on the retaining surface 87 are increased. When the pressure inside the bearing is higher, the sealing effects of the lips 85, 90 and the retaining effects of the lip 85 are increased. Thus, the seal 75 is coupled with the inner ring 1 in a secure way.

The external lip 91, axially located towards the external side of the rolling bearing, which is contacting the surface 92b of the rib 92 prevents foreign matter from entering the interior of the bearing, such as moisture, dust or muddy water. Any increase in pressure outside the bearing leads to an increase of the pressing force of the lip 31 against the surface 92b. The internal lip 90 supplements the action of the external lip 91 and vice-versa, and improves protection against the ingress of moisture and other foreign bodies into the bearing from the outside.

The internal and external lips 90, 91 also maintain their functions in the event of relative movements of the two rings 1, 2 under the action of loads (axial, radial, tipping moments) to which the bearing may be subjected during operation of the machine, without the seal 7 losing its sealing function.

The seal 75 also comprises an annular grip portion 93 issued from the external side of the heel of the static seal portion 80 and extending axially towards the outside. The grip portion 93 extends axially the radial portion 84 and is provided at its free end with a rib or protrusion 94. The protrusion 94 has here a spherical form. The free end of the annular portion 94 is axially offset outward relative to the lip 91 and coplanar with the radial lateral surface 2b of the outer ring 2. The grip portion 93 and the protrusion 94 are in a non-contact state with the rings 1, 2 and with the outer lips 91 in order that a tool may be easily inserted into the rolling bearing to extract the seal outside of said bearing.

As above-mentioned, the sealing of the retaining on the other side is provided by the seal 76 which is identical to the seal 75 and which cooperates with annular rib 96 of the outer ring 2. The ribs 92, 96 are mutually symmetric with respect to the transverse radial plane passing through the centre of the rolling bearing. In the embodiment depicted, the ribs 92, 96 are integrally formed with the outer ring 2. Alternatively, said ribs may be separate bodies.

On the variant illustrated in Figure 9, in which identical parts are given identical references, the rings 1, 2 and the seal 75 are similar but reversed with respect to the embodiment shown of Figures 7 and 8. The static seal portion 80 of the seal 75 is fixed to the outer ring 2 and the dynamic seal portion 81 cooperates with a rib 92 provided on the inner ring 1. Here, the inner ring 1 exhibits an axial length which is greater than the axial length of the outer ring 2.

In the last two embodiments, the outer radial surfaces of the ribs 65, 66, 70, 71 and the outer frustoconical surfaces of the ribs 92, 96 may be coated to prevent corrosion under the lip tips or ends when the rolling bearing is used in aggressive environments. The coating used can be rubber, zinc, non-corroding steel, ceramic, organic material with ceramics particles, or polytetrafluorethylene.

In the previous embodiments, the seal 7, 8 are formed from an elastic material like a thermoplastic urethane liner or an elastomer. Alternatively, the seals can be made from metal, for example stainless steel or an extruded metal like a corrosion resistant aluminum alloy. In case of extruded metal, the profile of the seals remains the same. In case of stainless steel, the seals would be of profiled annular bands fixed together.

It should be noted that the embodiments illustrated and described were given merely by way of non-limiting indicative examples and that modifications and variations are possible within the scope of the invention. Thus, the invention applies not only to double rows of balls with four-point contact but also to other types of rolling bearing, for example bearings with a single row of balls, or with at least free rows of balls. It is easily understood that it could also be possible to use bearing with other types of rolling members such as rollers. In each of the disclosed embodiments, the grip portion is continuous in the circumferential direction of the seal. Alternatively, the grip portion may be segmented in the circumferential direction or may comprise axial lugs spaced with respect to one another. The disclosed rolling bearings are particularly useful as bearing for wind turbines which are submitted to high internal pressures and exposed to UV light and rain water.

## Claims

1. Rolling bearing comprising an inner ring (1), an outer ring (2), at least one row of rolling elements (3) and at least one seal (7) provided between said rings, the seal comprising a static seal portion fixed to one of the rings and a dynamic seal portion having at least a lip in contact with another ring, **characterized in that** the static seal portion comprises an annular groove oriented axially towards the corresponding ring and in which a complementary rib provided on said ring is housed to retain the seal on said ring, and **in that** the seal further comprises a grip portion (93) at least partly axially offset relative to the friction lip towards the outside of the rolling bearing, said grip portion being in a non-contact state with the inner and outer rings to allow the seal to be held and extracted outside of the rolling bearing.

2. Rolling bearing according to claim 1, wherein the grip portion (93) extends axially towards the outside.

3. Rolling bearing according to claims 1 or 2, wherein the grip portion comprises at its free end a protrusion (94).

4. Rolling bearing according to claim 3, wherein the protrusion (94) is axially offset relative to a radial surface of at least one of the rings towards the interior of the rolling bearing or coplanar with said radial surface.

5. Rolling bearing according to any of the preceding claims, wherein the seal comprises at least an internal lip (90) and an external lip (91) respectively directed towards the internal side and the external side of the rolling bearing.

6. Rolling bearing according to claim 5, wherein the free end of the grip portion (93) is axially offset outwards relative to the external lip (91).

7. Rolling bearing according to any of the preceding claims, wherein the seal comprises an annular portion (82, 84, 85) from which the grip portion and the lip(s) are issued.

8. Rolling bearing according to any of the preceding claims, wherein the static seal portion comprises an axial portion (82) mounted into a groove (83) of the corresponding ring, a radial portion (84) extending said axial portion, and a tilted portion (85) extending said radial portion and directed obliquely towards the axial portion and adapted to press against a retaining surface (87) of the corresponding ring, said portions (82, 84, 85) defining the annular groove (86).

## Patentansprüche

1. Kugellager, umfassend einen Innenring (1), einen Außenring (2), mindestens eine Reihe von Kugellagern (3) und mindestens eine Dichtung (7), die zwischen den Ringen bereitgestellt ist, wobei die Dichtung einen statischen Dichtabschnitt umfasst, der an einem der Ringe befestigt ist, und einen dynamischen Dichtabschnitt, der mindestens eine Lippe in Kontakt mit einem anderen Ring aufweist, **dadurch gekennzeichnet, dass** der statische Dichtabschnitt eine Ringnut umfasst, die axial zum zugehörigen Ring ausgerichtet ist, wobei eine komplementäre Rippe, die auf dem Ring bereitgestellt ist, zum Halten der Dichtung auf dem Ring untergebracht ist, und dadurch, dass die Dichtung ferner einen Griffabschnitt (93) umfasst, der mindestens zum Teil axial von der Reibungslippe zur Außenseite des Kugellagers versetzt ist, wobei der Griffabschnitt in einem kontaktlosen Zustand mit dem Innen- und Außenring ist, um der Dichtung zu ermöglichen, außerhalb des Kugellagers gehalten und davon abgezogen zu werden.

2. Kugellager nach Anspruch 1, wobei sich der Griffabschnitt (93) axial nach außen erstreckt.

3. Kugellager nach einem der Ansprüche 1 oder 2, wobei der Griffabschnitt an seinem freien Ende einen Vorsprung (94) umfasst.

4. Kugellager nach Anspruch 3, wobei der Vorsprung (94) axial in Bezug auf eine radiale Oberfläche mindestens eines der Ringe nach innen des Kugellagers oder koplanar zu der radialen Oberfläche versetzt ist.

5. Kugellager nach einem der vorhergehenden Ansprüche, wobei die Dichtung mindestens eine innere Lippe (90) und eine äußere Lippe (91) umfasst, die jeweils zur Innenseite bzw. Außenseite des Kugellagers ausgerichtet sind.

6. Kugellager nach Anspruch 5, wobei das freie Ende des Griffabschnitts (93) axial nach außen in Bezug auf die Außenlippe (91) versetzt ist.

7. Kugellager nach einem der vorhergehenden Ansprüche, wobei die Dichtung einen ringförmigen Abschnitt (82, 84, 85) umfasst, von dem der Griffabschnitt und die Lippe(n) ausgehen.

8. Kugellager nach einem der vorhergehenden Ansprüche, wobei der statische Dichtabschnitt einen axialen Abschnitt (82) umfasst, der in einer Nut (83) des zugehörigen Rings montiert ist, einen radialen Abschnitt (84), der den axialen Abschnitt verlängert, und einen geneigten Abschnitt (85), der den radialen Abschnitt verlängert und schräg zum axialen Abschnitt gerichtet ist, um gegen eine Halteoberfläche (87) des zugehörigen Rings zu drücken, wobei die Abschnitte (82, 84, 85) die ringförmige Nut (86) definieren.

## Revendications

1. Palier à roulement comprenant une bague intérieure (1), une bague extérieure (2), au moins une rangée d'éléments de roulement (3) et au moins un joint (7) prévu entre lesdites bagues, le joint comprenant une partie de joint statique fixée à l'une des bagues et une partie de joint dynamique ayant au moins une lèvre en contact avec une autre bague, **caractérisé en ce que** la partie de joint statique comprend une gorge annulaire orientée axialement vers la bague correspondante et dans laquelle une nervure complémentaire prévue sur ladite bague est reçue de manière à retenir le joint sur ladite bague, et **en ce que** le joint comprend en outre une partie de préhension (93) au moins en partie axialement décalée par rapport à la lèvre de friction vers l'extérieur du palier à roulement, ladite partie de préhension étant dans un état de non-contact avec les bagues intérieure et extérieure pour permettre au joint d'être tenu et extrait hors du palier à roulement.

2. Palier à roulement selon la revendication 1, dans lequel la partie de préhension (93) s'étend axialement vers l'extérieur.

3. Palier à roulement selon les revendications 1 ou 2, dans lequel la partie de préhension comprend à son extrémité libre une saillie (94).

4. Palier à roulement selon la revendication 3, dans lequel la saillie (94) est décalée axialement par rapport à une surface radiale d'au moins l'une des bagues vers l'intérieur du palier à roulement ou est coplanaire avec ladite surface radiale.

5. Palier à roulement selon l'une quelconque des revendications précédentes, dans lequel le joint comprend au moins une lèvre interne (90) et une lèvre externe (91) orientées respectivement vers le côté interne et le côté externe du palier à roulement.

6. Palier à roulement selon la revendication 5, dans lequel l'extrémité libre de la partie de préhension (93) est décalée axialement vers l'extérieur par rapport à la lèvre externe (91).

7. Palier à roulement selon l'une quelconque des revendications précédentes, dans lequel le joint comprend une partie annulaire (82, 84, 85) depuis laquelle partent la partie de préhension et la ou les lèvre(s).

8. Palier à roulement selon l'une quelconque des revendications précédentes, dans lequel la partie de joint statique comprend une partie axiale (82) montée dans une gorge (83) de la bague correspondante, une partie radiale (84) prolongeant ladite partie axiale, et une partie inclinée (85) prolongeant ladite partie radiale et orientée obliquement vers la partie axiale et prévue pour presser contre une surface de retenue (87) de la bague correspondante, lesdites parties (82, 84, 85) définissant la gorge annulaire (86).
